# EUROPÄISCHE PATENTSCHRIFT

(11) **EP 0 917 751 B1**
(45) Veröffentlichungstag und Bekanntmachung des Hinweises auf die Patenterteilung: **27.02.2002**
(21) Anmeldenummer: 96924700.6
(22) Anmeldetag: 29.07.1996
(51) Int. Cl.: H02B 1/052

(54) **VORRICHTUNG ZUM VERBINDEN EINES ELEKTRISCHEN SCHALTGERÄTES MIT EINER SAMMELSCHIENE UND EINER TRAGSCHIENE**
DEVICE FOR CONNECTING AN ITEM OF ELECTRICAL SWITCHGEAR TO A BUSBAR AND A MOUNTING RAIL
DISPOSITIF PERMETTANT DE CONNECTER UN DISPOSITIF DE COMMUTATION ELECTRIQUE A UNE BARRE OMNIBUS ET A UN RAIL DE MONTAGE

(43) Veröffentlichungstag der Anmeldung: 26.05.1999
(73) Patentinhaber: FELTEN & GUILLEAUME AUSTRIA AG, 3943 Schrems-Eugenia 1 (AT)
(72) Erfinder: TETIK, Adolf, A-1180 Wien (AT)
(74) Vertreter: Gibler, Ferdinand, Dipl.Ing. Dr. techn.
(86) Internationale Anmeldenummer: AT9600136
(87) Internationale Veröffentlichungsnummer: WO9805107

(56) Entgegenhaltungen:
- EP-A- 0 315 057
- EP-A- 0 528 371
- DE-A- 2 912 076
- DE-B- 1 143 251
- DE-U- 9 213 118

## Beschreibung

Die Erfindung betrifft eine Vorrichtung mit den Merkmalen des einleitenden Teils des unabhängigen Anspruchs 1.

Eine derartige Vorrichtung ist aus der DE 2 912 076 A1 bekannt. Die aus der DE 2 912 076 A1 bekannte Verbindungsvorrichtung weist jedoch den Nachteil auf, daß durch eine vorgegebene Einschaltrichtung des Betätigungsknopfes des Schaltgerätes (beispielsweise nach oben) auch die Lage der Sammelschiene und der federnden Zunge der Rastverbindung vorgegeben ist. Das kann zur Folge haben, daß die federnde Zunge der Rastverbindung nicht oder nur schwer zugänglich ist, so daß Fälle auftreten können, in denen die vorbekannte Verbindungsvorrichtung nicht oder nur unter erschwerten Umständen zum Einsatz kommen kann.

Aus der DE-U 92 13 118 ist ein auf einer Tragschiene festlegbarer Aufsetzfuß bekannt, an dem eine Klemmenanordnung festlegbar ist. Der Aufsetzfuß besitzt zwei die Längsränder der Tragschiene umgreifende Nasen, wovon eine starr und die andere in einem verstellbaren Schieber angeordnet ist. Um die Klemmenanordnung mit dem Aufsetzfuß zu verbinden, ist ein Mittelstück vorgesehen, das eine T-förmig oder schwalbenschwanzförmig profilierte Nut aufweist, in die zwei Rastnasen, die an Federlaschen vorgesehen sind, hineingedrückt werden können.

Zur Wandbefestigung von Gehäusen schlägt die EP 528 371 A vor, den Bodentetil des Gehäuses auf seiner Außenseite mit Halteelementen zu versehen, die das Aufsetzen eines austauschbaren Befestigungsadapters ermöglichen. Der Befestigungsadapter wird seinerseits an einer Hutprofilschiene über eine feste und eine elastisch verstellbare Nase festgelegt.

Der Erfindung liegt die Aufgabe zugrunde, eine Vorrichtung zur Verfügung zu stellen, bei der einerseits eine feste und sichere Befestigung des Schaltgerätes an der Tragschiene gewährleistet ist und anderseits das Schaltgerät problemlos in und außer Eingriff mit der Sammelschiene gebracht werden kann.

Gelöst wird diese Aufgabe bei einer gattungsgemäßen Vorrichtung durch die Merkmale des unabhängigen Anspruches 1.

Bei der erfindungsgemäßen Vorrichtung sind die Befestigung des Schaltgerätes an der Tragschiene einerseits und an der Sammelschiene anderseits voneinander unabhängig, so daß zuerst der Träger alleine problemlos an der Tragschiene befestigt und anschließend das Schaltgerät mit dem Träger und der Sammelschiene verbunden werden kann. Die bietet den Vorteil, daß bei der Befestigung des Trägers an der Tragschiene keine Rücksicht auf eine weitere Verbindung des Schaltgerätes mit der Sammelschiene genommen werden muß.

In der Folge ist auch die Befestigungseinrichtung des Schaltgerätes an der Tragschiene wesentlich robuster und einfacher ausführbar, da ein Verschieben des Schaltgerätes direkt auf der Tragschiene nicht mehr erforderlich ist, um die Verbindung zwischen Schaltgerät und Sammelschiene herzustellen. Überdies kann der Träger ohne Rücksicht auf die erst später herzustellende Verbindung zwischen Schaltgerät und Sammelschiene problemlos an der Tragschiene befestigt werden.

Durch die "symmetrische" Anordnung der Rastverbindung am Gehäuse kann die federnde Zunge sowohl an der der Sammelschiene gegenüberliegenden Seite des Gehäuses als auch auf der gleichen Seite liegen.

Zusätzlich ergibt sich in Verbindung mit einer Ausführungsform eines Gehäuses, bei dem auf beiden Stirnseiten des Schaltgerätes Schlitze zur Verbindung mit der Sammelschiene vorgesehen sind, der Vorteil, daß das Gehäuse sowohl bei beliebig vorgegebener Lage der Sammelschiene als auch bei beliebig vorgegebener Lage der Zunge (bei vorgegebener Einschaltrichtung des Betätigungsknopfes) problemlos auf den Träger aufgesetzt und mit der Sammelschiene verbunden werden kann. Beim Abnehmen ergeben sich ebenfalls keine Probleme.

Bevorzugte und vorteilhafte Ausführungsformen der Erfindung sind Gegenstand der Unteransprüche.

Weitere Merkmale und Vorteile der Erfindung ergeben sich aus der nachfolgenden Beschreibung der in den Zeichnungen dargestellten Ausführungsbeispiele der Erfindung.
Fig. 1 zeigt eine Vorrichtung in Seitenansicht,
Fig. 2 zeigt eine Draufsicht auf die Vorrichtung von Fig. 1,
Fig. 3 bis 6 den Verbindungsbereich des Gehäuses des Schaltgerätes mit dem Träger, wobei Fig. 3 eine Ansicht des Gehäuses von der Seite, Fig. 4 eine Ansicht von unten, Fig. 5 eine Ansicht von links und Fig. 6 einen Schnitt entlang der Linie VI-VI in Fig. 3 zeigt,
Fig. 7 bis 11 zeigen eine erste Ausführungsform eines Trägers, der mit dem Gehäuse des Schaltgerätes sowie der Tragschiene verbindbar ist, wobei Fig. 7 eine Aufrißansicht ist, Fig. 8 eine Ansicht von unten auf den Träger von Fig. 7 zeigt, Fig. 9 einen Schnitt entlang der Linie IX-IX in Fig. 8 und die Fig. 10 und 11 Ansichten von links bzw. rechts auf den Träger von Fig. 7 zeigen,
Fig. 12 zeigt eine Ansicht von unten auf die Gehäuse von drei nebeneinander angeordneten Schaltgeräten,
Fig. 13 zeigt eine Teilansicht auf Fig. 12 von oben,
Fig. 14 zeigt einen Schnitt in Fig. 13 entlang der Linie XIV-XIV,

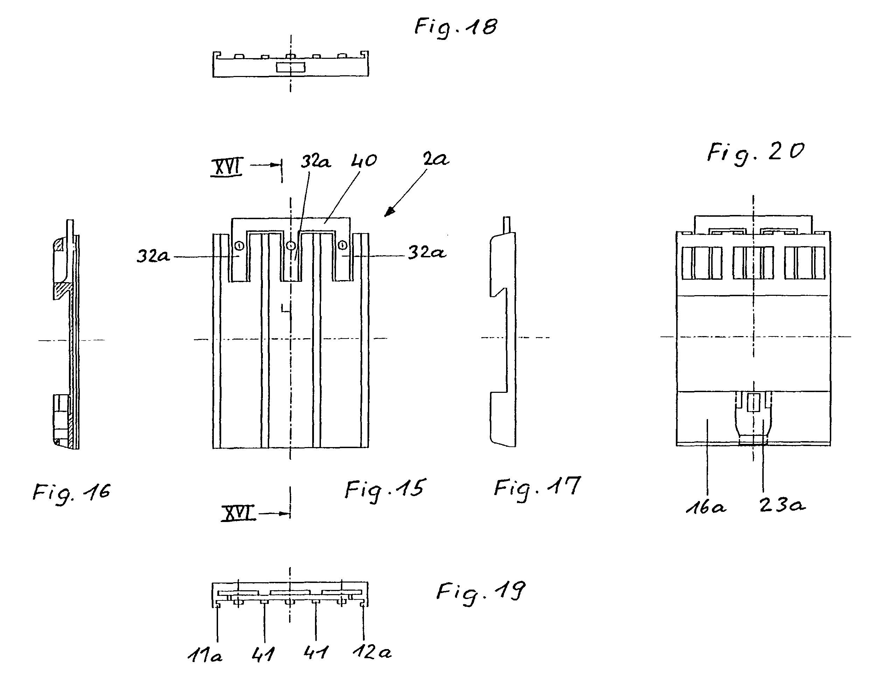

Fig. 15 bis 20 zeigen eine weitere Ausführungsform eines Trägers, mit dem drei Schaltgeräte gleichzeitig an einer Tragschiene befestigt werden können, wobei Fig. 15 eine Ansicht des Trägers von oben, d.h. von der Seite zeigt, an der die Gehäuse der Schaltgeräte angeordnet sind, Fig. 16 einen Schnitt durch den Träger von Fig. 15 entlang der Linie XVI-XVI, Fig. 17 eine Ansicht auf den Träger von Fig. 15 von links, Fig. 18 eine Ansicht von unten und Fig. 19 eine Ansicht von oben auf den Träger und Fig. 20 eine Ansicht auf den Träger entsprechend Fig. 15 zeigt, jedoch von der gegenüberliegenden Seite, und
Fig. 21 und 22 zeigen einen Schieber in Draufsicht und im Längsschnitt.

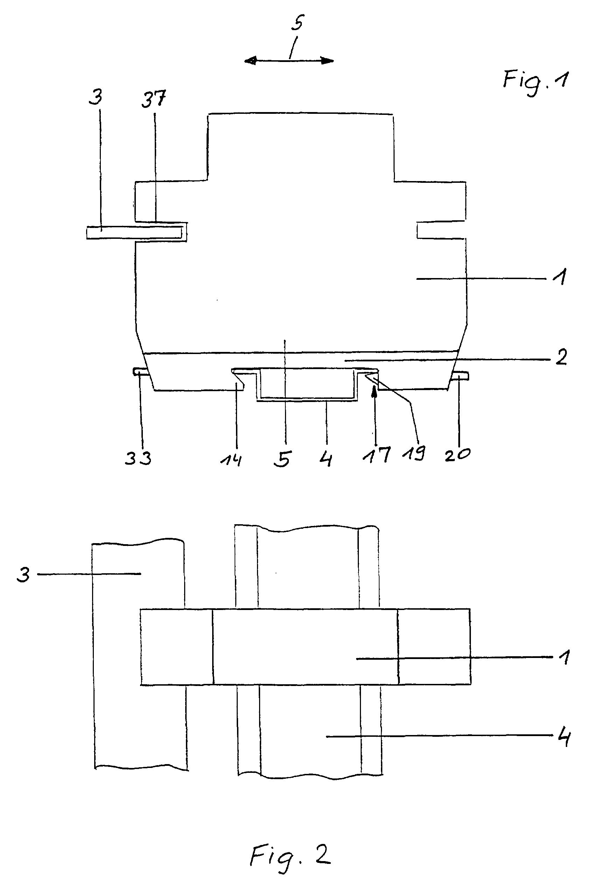

In den Fig. 1 und 2 ist schematisch ein Gehäuse 1 eines Schaltgerätes, z.B. eines Leitungsschutzschalters, dargestellt, das mit einer Sammelschiene 3 und über einen Träger 2 mit einer Tragschiene 4 verbunden ist. Das Gehäuse 1 ist nach dem Lösen einer Rastverbindung zwischen dem Gehäuse 1 und dem Träger 2 in Richtung des Doppelpfeiles 5 relativ zum Träger 2, zur Tragschiene 4 und zur Sammelschiene 3 verschiebbar, so daß das Gehäuse 1 außer Eingriff mit der Sammelschiene 3 gebracht und vom Träger 2 abgenommen werden kann.

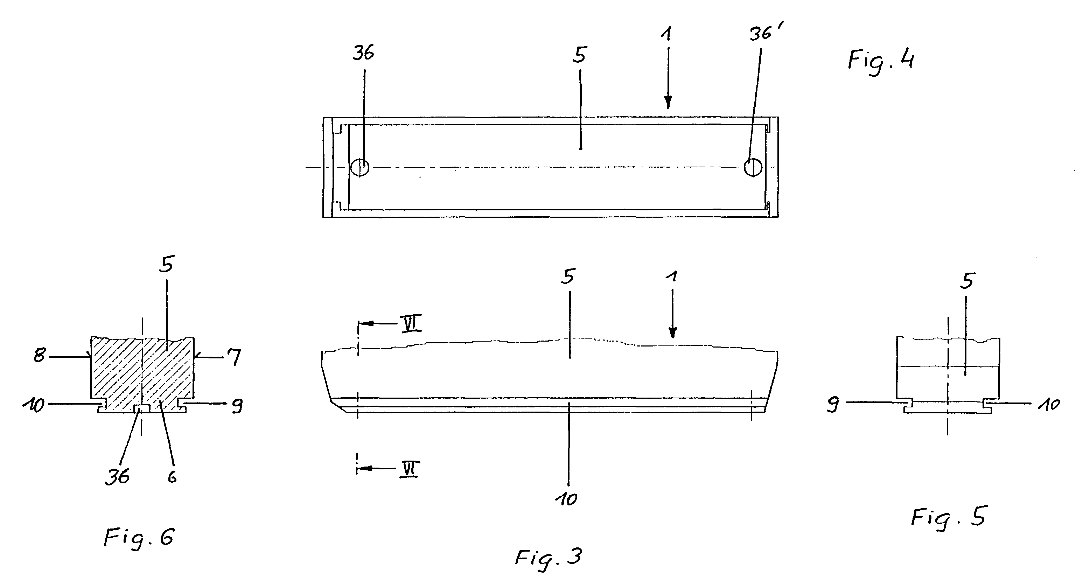

In den Fig. 3 bis 6 ist der untere Teil 5 des Gehäuses 1, der mit dem Träger 2 verbunden werden kann, in vergrößertem Maßstab dargestellt. Das Gehäuse 1 weist (Fig. 5 und 6) an seiner dem Träger 2 zugewandten Seite eine im wesentlichen T-förmige Leiste 6 auf, die an den Seitenwänden 7 und 8 des Gehäuses 1 Führungsnuten 9 und 10 bildet, die sich im wesentlichen über die gesamte Länge des Gehäuses 1 erstrecken.

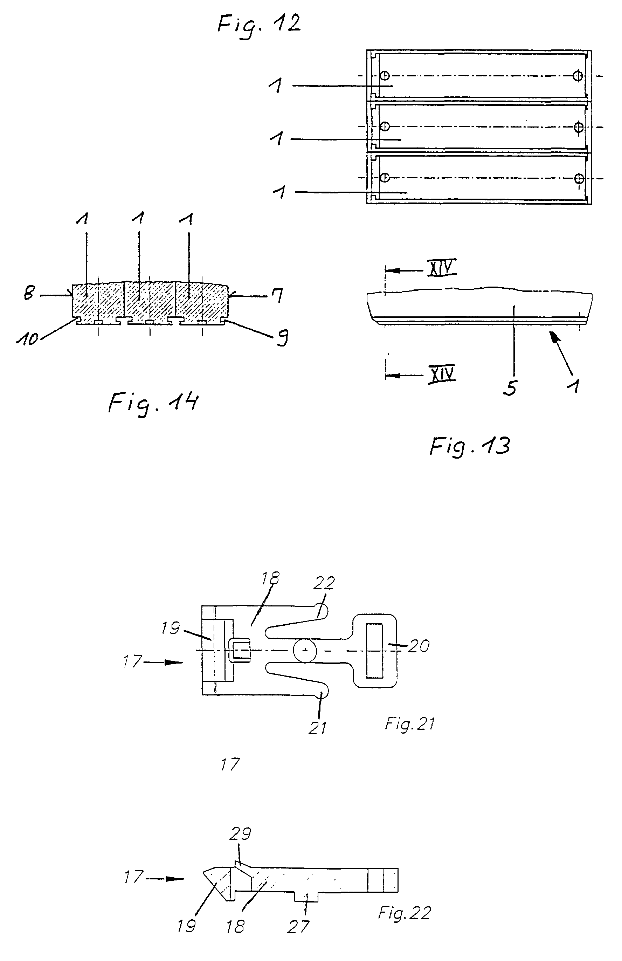

In die Führungsnuten 9 und 10 greifen die freien Längsränder 11 und 12 des Trägers 2 ein, der im Verbindungsbereich mit dem Gehäuse 1 einen im wesentlichen C-förmigen Querschnitt aufweist (Fig. 10 und 11).

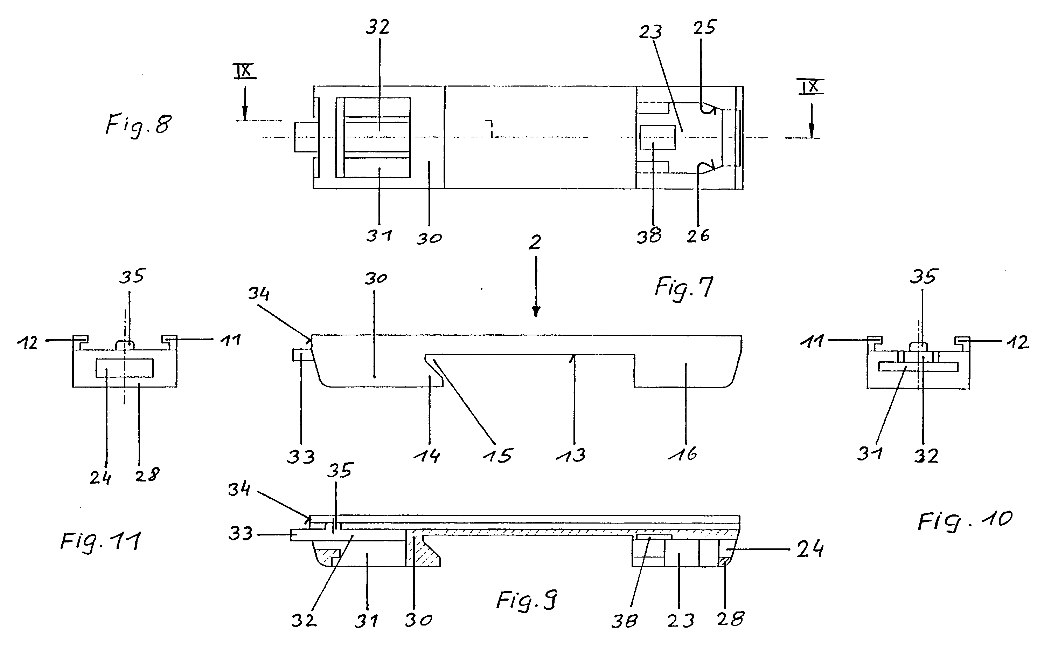

Wie in Fig. 7 gezeigt ist, weist der Träger 2 an seiner vom Gehäuse 1 abgewandten Seite einen Freiraum mit einer Montagefläche 13 auf, in dem die sich quer zur Mittelebene des Gehäuses 1 erstreckende Tragschiene 4 aufgenommen werden kann. Zum Befestigen der Tragschiene 4 an der Montagefläche 13 des Gehäuses 1 weist der Träger 2 an einer Seite an einem Sockel 30 eine Nase 14, die eine Hinterschneidung 15 begrenzt, und auf der der Nase 14 gegenüberliegenden Seite einen Sockel 16 auf, in dem ein Schieber 17 gelagert ist, der quer zur Längserstreckung der Tragschiene 4 zwischen vorzugsweise zwei Haltestellungen verschiebbar ist.

Der Schieber 17 besteht in der in den Fig. 21 und 22 dargestellten Ausführungsform aus einem Grundkörper 18. An einem Ende des Grundkörpers 18 ist eine Nase 19 und am anderen Ende ein Handhabe 20 angeordnet. Am Grundkörper 18 sind weiters Federarme 21 und 22 angeordnet, mit denen der Schieber 17 am Träger 2 in zwei Stellungen, der Offenstellung und der Befestigungsstellung (siehe Fig. 1) festgelegt wird. Der Schieber 17 ist im Sockel 16 in einer Ausnehmung 23 aufgenommen, wobei die Handhabe 20 durch einen Schlitz 24 nach außen ragt (Fig. 1). Seitlich ist die Ausnehmung 23 unter anderem durch Schrägflächen 25, 26 begrenzt, an denen die seitlichen Federarme 21, 22 des Schiebers 17 entlangleiten und sich federnd abstützen, wenn der Schieber 17 vor und zurück geschoben wird. Durch einen Ansatz 27 am Schieber 17 und einen den Schlitz 24 begrenzenden Querbalken 28 wird die Bewegung des Schiebers 17 zurück, d.h. in Fig. 1 nach rechts, begrenzt. Die Bewegung des Schiebers 17 nach vorne, d.h. in Richtung auf die Nase 14 zu, wird durch einen Vorsprung 29, der in eine Vertiefung 38 im Bereich der Ausnehmung 23 eingreift, begrenzt.

Die Nase 14 ist am Sockel 30 des Trägers 2 angeordnet, der eine Aussparung 31 aufweist, in der eine federnde Zunge 32 aufgenommen ist. Die Zunge 32 ist mit dem Träger 2 vorzugsweise einstückig ausgebildet, und ragt mit ihrem freien Ende 33 über die Stirnfläche 34 des Trägers 2 hinaus. An ihrer dem Gehäuse 1 zugewandten Seite weist die Zunge 32 einen Ansatz 35 auf, der in eine von zwei Ausnehmungen 36 und 36' (Fig. 4 und Fig. 6) am Gehäuse 1 eingreift, wenn der Träger 2 am Gehäuse 1 befestigt ist.

Je eine Ausnehmung 36 und 36' ist im Bereich der Stirnenden der dem Träger 2 zugewandten Seite des Gehäuses 1 angeordnet. Dies bietet den Vorteil, daß der Träger 27 sowohl von der einen (linken) als auch von der anderen (rechten) Seite auf das Gehäuse 1 aufgeschoben und an diesem durch Verrasten befestigt werden kann, was die Montage weiter vereinfacht.

Das Befestigen der erfindungsgemäßen Vorrichtung an einer Tragschiene 4 und einer Sammelschiene 3 kann beispielsweise so erfolgen, daß zuerst der Träger 2 vom Gehäuse 1 abgenommen wird, indem die Zunge 32 durch Angreifen an ihrem freien Ende 33 vom Gehäuse 1 weggebogen wird, so daß der Ansatz 35 aus der Ausnehmung 36 oder 36' herausbewegt wird, worauf der Träger 2 vom Gehäuse 1 heruntergeschoben werden kann.

Der Träger 2 kann dann auf die Tragschiene 4 aufgesetzt und an dieser befestigt werden, indem ein Längsrand der Tragschiene 4 in der Hinterschneidung 15 der Nase 14 und der andere Längsrand der Tragschiene 4 zwischen dem Sockel 16 und der Nase 19 des Schiebers 17 und der Montagefläche 13 festgelegt wird, indem der Schieber 17 entgegen der Kraft der Federarme 21 und 22 zurückgeschoben und anschließend wieder vorgeschoben wird.

Dadurch, daß die Tragschiene 4 zwischen zwei trägerfesten Bauteilen, dem Sockel 30 bzw. dessen Nase 14 und dem Sockel 16 mit dem Schieber 17 aufgenommen ist, ist ein stabiler und verdrehfester Sitz des Trägers 2 an der Tragschiene 4 gewährleistet.

Anschließend kann das Gehäuse 1 einfach wieder auf den Träger 2 aufgeschoben werden, bis die Sammelschiene 3 in Eingriff mit der nicht dargestellten Anschlußklemme im Schlitz 37 am Gehäuse 1 gelangt und dort z.B. festgeschraubt werden kann, und der Ansatz 35 an der federnden Zunge 32 selbsttätig in eine der Ausnehmungen 36 und 36' am Gehäuse 1 einrastet.

Bisher wurde eine Ausführungsform der erfindungsgemäßen Vorrichtung beschrieben, bei der der Träger 2 etwa die Breite des Gehäuses 1 aufweist und am Träger 2 ein Gehäuse 1 befestigt werden kann.

In der Folge wird unter Bezugnahme auf Fig. 12 bis 20 eine Ausführungsform der Erfindung beschrieben, bei der drei Gehäuse 1 mit einem einzigen Träger 2a verbunden sind, der die Verbindung zwischen den Gehäusen 1 und der Tragschiene 4 herstellt.

Der Träger 2a weist im wesentlichen die Form von drei nebeneinanderliegenden, wie zuvor beschrieben ausgestalteten Trägern 2 auf. Im Sockel 16a des bevorzugt einstückig ausgebildeten Trägers 2a, vorzugsweise in dessen Mitte ist eine Ausnehmung 23a für einen Schieber 17 vorgesehen. Weiters sind nur an den äußersten Rändern nach innen gekröpfte Ränder 11a und 12a zur Verbindung mit den Nuten 9 und 10 in den äußeren Seitenwänden 7 und 8 der beiden äußeren Gehäuse 1 vorgesehen.

Die drei Zungen 32a sind bei der Ausführungsform der Fig. 12 bis 20 miteinander über einen Quersteg 40 verbunden, so daß die Zungen 32a zum Lösen des Trägers 2a von den Gehäusen 1 gemeinsam betätigt werden können.

Insbesondere die in Fig. 18 und 19 dargestellte Ausführungsform des Trägers 2a mit in der Mitte verkürzten Stegen 41 setzt voraus, daß die in den Fig. 12 bis 14 dargestellten Gehäuse 1 miteinander verbunden sind.

Falls gewünscht wird, daß die Gehäuse 1 für sich getrennt am Träger 2a festgelegt werden können, sind die mittleren Stege 41 nicht verkürzt sondern mit Rändern 11a und 12a entsprechend dem Träger 2 ausgebildet, so daß drei C-förmig ausgebildete Führungen vorliegen, so daß jedes Gehäuse 1 für sich am Träger 2a befestigt werden kann. In diesem Fall entfällt auch der Querbalken 40, der die Zungen 32a (Fig. 15) verbindet.

Der in den Fig. 15 bis 20 dargestellte Träger 2a ist nicht auf die dargestellte Ausführungsform für drei Gehäuse 1 beschränkt, sondern kann auch z.B. für zwei oder mehr als drei Gehäuse 1 ausgelegt sein, wobei die Ausnehmung 23a im Sockel 16a vorzugsweise immer in der Mitte des Trägers 2a angeordnet ist.

Zusammenfassend kann ein Ausführungsbeispiel der Erfindung beispielsweise wie folgt dargestellt werden:

Die Vorrichtung zum Verbinden eines elektrischen Schaltgerätes mit einer Sammelschiene 3 und zum Befestigen des Schaltgerätes auf einer Tragschiene 4 weist einen mit dem Gehäuse 1 des Schaltgerätes verbindbaren Träger 2 auf, an dem Halterungen 14 und 19 für die Tragschiene 4 angeordnet sind.

Der Träger 2 ist über eine sich quer zur Tragschiene 4 erstreckende Führung 6, 9, 10, 11 und 12 mit dem Gehäuse 1 verbunden und weist eine Rastverbindung 35 und 36 in Form einer am Träger 2 angeordneten, federnden Zunge 32 und 33 auf, die am Gehäuse 1 einrastet.

## Patentansprüche

1. Vorrichtung zum Verbinden eines elektrischen Schaltgerätes mit einer Sammelschiene (3) und zum Befestigen des Schaltgerätes auf einer Tragschiene (4), mit an einer Montagefläche (13) des Schaltgerätes angeordneten Halterungen für die Tragschiene (4), wobei die Halterungen zwei die Längsränder der Tragschiene nach dem Befestigen umgreifende Nasen (14, 19) aufweisen, die an einem vom Gehäuse (1) des Schaltgerätes abnehmbaren Träger (2) angeordnet sind, wobei eine Nase (14) ortsfest am Träger (2) angeordnet ist, wobei der Träger (2) über eine sich quer zur Tragschiene (3) erstreckende Führung (6, 9, 10, 11, 12) mit dem Gehäuse (1) verbunden ist, und wobei der Träger (2) am Gehäuse (1) durch eine Rastverbindung (35, 36) gehalten ist, die eine am Träger (2) angeordnete, federnde Zunge (32) aufweist, die am Gehäuse (1) selbsttätig einrastet und wobei die Zunge (32) im am Gehäuse (1) befestigten Zustand des Trägers (2) mit ihrem freien Ende (33) über die Stirnfläche (34) des Trägers (2) vorragt, **dadurch gekennzeichnet, daß** die andere Nase (19) an einem Schieber (17) angeordnet ist, der am Träger (2) gelagert ist, daß der Schieber (17) eine Handhabe (20) aufweist, die über die Stirnfläche des Trägers (2) vorragt, und daß der am Gehäuse (1) angeordnete Teil (36, 36') der Rastverbindung (35, 36, 36') jeweils einmal im Bereich der beiden Stirnenden der dem Träger (2) zugewandten Seite des Gehäuses (1) angeordnet ist.

2. Vorrichtung nach Anspruch 1, **dadurch gekennzeichnet, daß** die Führung (6, 9, 10, 11, 12) des Trägers (1) am Gehäuse (1) des Schaltgerätes aus einer im wesentlichen T-förmigen, am Gehäuse angeordneten Leiste (5) besteht, die vom im Führungsbereich im wesentlichen C-förmig ausgebildeten Träger (2) umfaßt wird.

3. Vorrichtung nach Anspruch 1 oder 2, **dadurch gekennzeichnet, daß** im Gehäuse (1) zwei Ausnehmungen (36, 36') und an der Zunge (32) ein Ansatz (35), der im am Gehäuse (1) befestigten Zustand des Trägers (2) in die Ausnehmung (36, 36') eingreift, angeordnet sind.

4. Vorrichtung nach einem der Ansprüche 1 bis 3, **dadurch gekennzeichnet, daß** der Träger (2) etwa die Breite eines Gehäuses (1) aufweist.

5. Vorrichtung nach einem der Ansprüche 1 bis 3, **dadurch gekennzeichnet, daß** der Träger (2a) ein Vielfaches der Breite eines Gehäuses (1), vorzugsweise die dreifache Breite eines Gehäuses (1) aufweist.

6. Vorrichtung nach Anspruch 5, **dadurch gekennzeichnet, daß** der Träger (2a) einen vorzugsweise mittig angeordneten Schieber (17) zur Verbindung mit der Tragschiene (4) aufweist.

7. Vorrichtung nach Anspruch 5 oder 6, **dadurch gekennzeichnet, daß** jedem der mit dem Träger (2a) zu verbindenden Gehäuse (1) eine Zunge (32a) zugeordnet ist und daß die Zungen (32a) miteinander verbunden (40) sind.

## Claims

1. An apparatus for connecting an electric switchgear with a busbar (3) and for fastening the switchgear to a mounting rail (4), with mounts for the mounting rail (4) which are disposed on a mounting surface (13) of the switchgear, with the mounts comprising two noses (14, 19) which encompass the longitudinal edges of the mounting rail after the fastening and are disposed on a support (2) removable from the housing (1) of the switchgear, with one nose (14) being arranged in a stationary manner on the support (2), with the support (2) being connected by means of a guide means (6, 9, 10, 11, 12) with the housing, with the guide means extending transversally to the mounting rail (3) and with the support (2) being held on the housing (1) by a latching connection (35, 36) which comprises a resilient tongue (32) which is disposed on the support (2), which tongue (32) automatically latches onto the housing (1) and projects with its free end (33) beyond the face surface (34) of the support (2) in the state when fastened to the housing (1), **characterized in that** the other nose (19) is arranged on a slide (17) which is held on the support (2), the slide (17) is provided with a grip (20) which projects beyond the face surface of the support (2) and the part (36, 36') of the latching connection (35, 36, 36') which is disposed on the housing (1) once each in the zone of the two face ends of the side of the housing (1) facing the support (2).

2. An apparatus as claimed in claim 1, **characterized in that** the guide means (6, 9, 10, 11, 12) of the support (2) on the housing (1) of the switchgear consists of a substantially T-shaped strip (6) disposed on the housing which is encompassed by the support (2) which is arranged substantially C-shaped in the guide zone.

3. An apparatus as claimed in claim 1 or 2, **characterized in that** two recesses (36, 36') are provided in the housing (1) and a set-off (35) is provided on the tongue (32), which set-off engages in the recess (36, 36') when the support (2) is fastened in the housing (1).

4. An apparatus as claimed in one of the claims 1 to 3, **characterized in that** the support (2) has approximately the width of a housing (1).

5. An apparatus as claimed in one of the claims 1 to 3, **characterized in that** the support (2a) has a multiple of the width of a housing (1), preferably three times the width of a housing (1).

6. An apparatus as claimed in claim 5, **characterized in that** the support (2a) is provided with a preferably centrally arranged slide (17) for connection with the mounting rail (4).

7. An apparatus as claimed in claim 5 or 6, **characterized in that** the housing (1) to be connected with the support (2a) is associated with a tongue (32a) and that the tongues (32a) are mutually connected (40).

## Revendications

1. Dispositif pour relier un appareil de commutation électrique à une barre collectrice (3) et fixer l'appareil de commutation sur une barre de support (4), avec des fixations pour la barre de support (4) disposées sur une surface de montage (13) de l'appareil de commutation qui présentent deux ergots (14, 19) entourant les bords longitudinaux de la barre de support après la fixation et disposés sur un support (2) pouvant être enlevé du boîtier (1) de l'appareil de commutation, un ergot (14) étant disposé de manière fixe sur le support (2), lequel support (2) est relié au boîtier (1) par un guide (6, 9, 10, 11, 12) perpendiculaire à la barre de support (4), le support (2) étant maintenu sur le boîtier (1) par un emboîtement (35, 36) qui présente une languette élastique (32) disposée sur le support (2) qui s'emboîte d'elle-même sur le boîtier (1) et dépasse par son extrémité libre (33) au-delà de la face (34) du support (2) lorsque le support (2) est fixé sur le boîtier (1), **caractérisé en ce que** l'autre ergot (19) est disposé sur une coulisse (17) portée par le support (2), **en ce que** la coulisse (17) présente une prise (20) qui dépasse au-delà de la face du support (2) et **en ce que** la partie (36, 36') de l'emboîtement (35, 36, 36') disposée sur le boîtier (1) est disposée au niveau de chacune des extrémités des faces du côté du boîtier (1) orienté vers le support (2).

2. Dispositif selon la revendication 1, **caractérisé en ce que** le guide (6, 9, 10, 11, 12) du support (2) sur le boîtier (1) de l'appareil de commutation se compose d'une bande (6) sensiblement en forme de T, disposée sur le boîtier et entourée par le support (2) qui est sensiblement en forme de C dans la zone de guidage.

3. Dispositif selon la revendication 1 ou 2, **caractérisé en ce qu'**il est prévu dans le boîtier (1) deux évidements (36, 36') et sur la languette (32) une saillie (35) qui se met en prise dans l'évidement (36, 36') lorsque le support (2) est fixé sur le boîtier (1).

4. Dispositif selon l'une quelconque des revendications 1 à 3, **caractérisé en ce que** le support (2) a sensiblement la même largeur qu'un boîtier (1).

5. Dispositif selon l'une quelconque des revendications 1 à 3, **caractérisé en ce que** le support (2a) représente un multiple de la largeur d'un boîtier (1), de préférence le triple de la largeur d'un boîtier (1).

6. Dispositif selon la revendication 5, **caractérisé en ce que** le support (2a) présente une coulisse (17) disposée de préférence au centre pour la liaison avec la barre de support (4).

7. Dispositif selon la revendication 5 ou 6, **caractérisé en ce qu'**une languette (32a) est associée à chaque boîtier (1) devant être relié au support (2a) et **en ce que** les languettes (32a) sont reliées (40) entre elles.
